(19) Europäisches Patentamt
European Patent Office
Office européen des brevets

(11) **EP 4 509 329 A1**

(12) **EUROPEAN PATENT APPLICATION**

(43) Date of publication:
**19.02.2025 Bulletin 2025/08**

(51) International Patent Classification (IPC):
**B44C 1/17** (2006.01)

(21) Application number: **23204632.6**

(52) Cooperative Patent Classification (CPC):
**B44C 1/1712; B41M 3/12**

(22) Date of filing: **19.10.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.08.2023 CN 202311029284**

(71) Applicant: **Kurz Stamping Technology (Hefei) Co., Ltd.**
**Hefei 230601 (CN)**

(72) Inventors:
- **LINFENG, Li**
  *Hefei (CN)*
- **HAO, Hu**
  *Hefei (CN)*
- **FANG, Fang**
  *Hefei (CN)*

(74) Representative: **Zinsinger, Norbert**
**Louis Pöhlau Lohrentz**
**Patentanwälte Partnerschaft mbB**
**P.O.Box 30 55**
**90014 Nürnberg (DE)**

(54) **INSERT SHEET, TRANSFER FILM AND METHOD FOR PRODUCING AN INSERT SHEET**

(57) The invention relates to an insert sheet (10) comprising a substrate (11) and a transfer ply (3) of a transfer film (1) applied to the substrate (11),
wherein the transfer ply (3) comprises, in particular in the following sequence arranged on the substrate (11), at least one water-borne adhesive layer (6), at least one water-borne color layer (5) and a water-borne topcoat layer (4).

Fig. 3

EP 4 509 329 A1

**Description**

The invention relates to an insert sheet, a transfer film and a method for producing an insert sheet.

For the production of decorated molded parts, in particular in the automotive sector, usually an insert molding process is used. For this purpose, a plastic substrate, in particular in flat, two-dimensional form, is decorated with a transfer ply of a transfer film. These decorated substrates are usually called inserts. After decoration such an insert is formed, in particular deep-drawn, to a three-dimensional or 2,5-dimensional form and is inserted in a mold of an injection molding machine. To provide a decorated molded part the insert is back-injected with a plastic compound. Compared to other decorative processes such as spray painting or In-Mould-Decoration (IMD), the insert molding process is more stable and has a lot more choices of decorative design. The insert molding process combines the in-mold injection and decoration in one step. Therefore, it saves manpower, energy and money. The main advantage of the insert molding process is, that this process is suitable for deeply stretched, in particular deep-drawn three-dimensional or 2,5-dimensional parts and it can meet various design demands.

However, solvent-borne coatings are conventionally used for the layers of the transfer ply of the transfer film used to decorate the insert sheet. For example, these are solvent-borne topcoat layers, solvent-borne ink layers and solvent-borne adhesive layers. Such solvent-borne lacquers contain a lot of different solvents. During printing almost all of the solvents will be evaporated. However, the remaining solvents in the transfer film will also generate high VOC (=Volatile Organic Compounds) content in the final decorated molded part. Such volatile organic compounds are harmful to human being as well as environmentally harmful. Conventionally, due to the use of solvent-borne lacquers even in the production process of the transfer film, in particular the insert sheet, a lot of safety measurements must be fulfilled to avoid air pollution. Such safety measurements are expensive.

The object is therefore to specify an environment friendly insert sheet and a transfer film as well as a method for producing an insert sheet.

This object is achieved by an insert sheet comprising a substrate and a transfer ply of a transfer film applied to the substrate, wherein the transfer ply comprises, in particular in the following sequence arranged on the substrate, at least one water-borne adhesive layer, at least one water-borne color layer and a water-borne topcoat layer.

This object is further achieved by a transfer film, in particular for decorating an insert sheet according to one of claims 1 to 20, comprising a carrier layer and a transfer ply, wherein the transfer ply comprises, in particular in the following sequence arranged on the carrier layer, a water-borne topcoat layer, at least one water-borne color layer and a water-borne adhesive layer.

Further, this object is achieved by a method for producing an insert sheet, preferably according to claims 1 to 20, comprising a substrate and a transfer ply of a transfer film, in particular according to claims 21 to 33, applied to the substrate having the steps of:

- providing a carrier layer;
- applying, in particular in the following sequence, a water-borne topcoat layer, at least one water-borne color layer and a water-borne adhesive layer by means of printing onto a surface of the carrier layer to provide a transfer film;
- providing a substrate
- heat laminating the transfer ply of the transfer film onto a surface of the substrate, in particular wherein the water-borne adhesive layer is directly adjoined to the surface of the substrate.

Through the invention, it is now possible to reduce or to totally avoid the amount of environmentally unfriendly solvents in the production process of insert sheets as well as the insert sheet itself. Through the use of water-borne lacquers for the topcoat layer and/or color layers and/or adhesive layer and/or tie-coat layer it is now possible to produce environmentally friendly insert sheets and/or decorated molded parts, especially for the automotive sector, while those decorated molded parts and/or insert sheets do have nearly the same resistance against mechanical, chemical and/or environmental influences as decorated molded parts with insert sheets having a solvent-borne decoration.

A layer, a ply and a film are understood to mean, in particular, an essentially planar structure, which in turn is single-layered or multilayered. A film is preferably self-supporting. A layer or a ply is, for example, self-supporting or non-self-supporting.

Advantageous embodiments of the invention are described in the dependent claims.

It is preferably possible for the substrate to comprise a material or a combination of materials, individually or in combination as a laminate, co-extrusion or mixture, selected from: ABS, PC, PPA, POM, PMMA, PP. It is preferred that ABS (= acrylonitrile butadiene styrene copolymers) is used as material for the insert sheet. Because these plastic substrates are easy to process, easy to decorate with wet varnish systems, and have good resistance to environmental influences. However, in some embodiments it may also be possible to use another material for the substrate. In general, it might be useful to use a material that is similar to the plastic compound used for back-injecting the insert sheet. The similarity of the material of the substrate and the plastic compound improves the adhesion between these two elements.

It can also be provided that the substrate has a layer thickness in the range from 200 μm to 750 μm, preferably from 350 μm to 500 μm.

Moreover, it may be provided that the water-borne adhesive layer directly adjoins a surface of the substrate. The main task of the water-borne adhesive layer is to provide a securely adhesion between the transfer ply and the substrate. As described below for decorated molded parts a lot of requirements according to resistance should be fulfilled. The adhesion of the decorative transfer ply to the substrate is one of them.

It may further be provided that for transferring the transfer ply of the transfer film by heat lamination, the adhesive layer is activated and then cured to form a secure bond to the substrate. Preferably, the curing of the water-borne adhesive layer takes place after the insert sheet has been formed or deep-drawn.

The transfer film itself, which is used to decorate the insert sheet by transferring the transfer ply by heat lamination, comprises a carrier layer as described above.

Preferably is provided that the carrier layer of the transfer film comprises PET as material and has a layer thickness in the range from 6 μm to 100 μm.

Preferably it is also provided that the carrier layer will be detached after transferring the transfer ply to the substrate of the insert sheet.

For this purpose, it also may be provided that the transfer film comprises a detachment layer, which is preferably arranged between the carrier layer and the transfer ply, in particular the water-borne topcoat layer.

It also may be provided that the detachment layer is a water-borne detachment layer. The water-borne detachment layer has in particular a layer thickness in a range of from 0.01 μm to 1 μm, preferably in the range of from 0.05 μm to 0.3 μm. Further, it is possible for the water-borne detachment layer to contain one or more water-borne compounds, preferably one or more polymers and/or oligomers. Such polymers and/or oligomers are preferably selected from polyvinyl alcohol, polyvinyl pyrrolidone, carboxymethyl cellulose, methyl cellulose, polyols, starch, saccharides, gum arabic, gelatin, lipids, polyethylene oxide, polyvinyl butyral, polyester, polyurethane, polyacrylic acid and/or polyamide. It is possible for the water-borne detachment layer to have a combination of these polymers and/or oligomers. The water-borne detachment layer preferably contains polyvinyl alcohol, in particular produced from partially saponified polyvinyl acetate with degrees of saponification in a range of from 75% to 100%.

Alternatively, the detachment layer can be not water-borne. It is preferably provided that detachment layer comprises at least one material or a combination of materials selected from: wax, carnauba wax, montanic acid ester, polyethylene wax, polyamide wax, PTFE wax, silicone, melamine formaldehyde resin. In an advantageous embodiment, it can be provided that the at least one detachment layer has a layer thickness smaller than 1 μm, in particular smaller than 0.5 μm.

The detachment layer is preferably a polymeric detachment layer, which has a detachment behaviour that is better than and/or different from conventional carrier layers. Such detachment layers are irreversibly joined to the carrier layer and a transfer ply is arranged on the detachment layer. The transfer ply can in particular be detached from the carrier layer more easily with a polymeric detachment layer, with the result that a higher-quality decoration of the insert sheet is achieved.

As described above the transfer ply comprises in particular in the following sequence arranged on the carrier layer, a water-borne topcoat layer, at least one water-borne color layer and a water-borne adhesive layer. In some embodiments it may also be possible that the transfer film comprises a water-borne tie-coat layer, preferably which is arranged between the water-borne topcoat layer and the at least one water-borne color layer. The tie-coat layer can further improve and stabilize the adhesion between the water-borne topcoat layer and the water-borne color layer.

It can be possible that the water-borne tie-coat layer has a layer thickness in the range from 0,5 μm to 20 μm, preferably from 1 μm to 15 μm, further preferably from 1,5 μm to 7 μm.

It can also be provided that the water-borne tie-coat layer comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0,1 wt.-% to 5 wt.-% and a defoamer in the range from 0,1 wt.-% to 5 wt.-%. This composition provides improved printability, especially for gravure printing.

Further, it can be possible that a water-borne tie-coat layer is applied by means of gravure printing onto a surface of the carrier layer, preferably onto a surface of the water-borne topcoat layer.

Preferably it is provided that during applying the water-borne tie-coat layer the water-borne tie-coat layer has a dynamic viscosity in the range from 0.10 Pa·s to 1.0 Pa s, preferably from 0.2 Pa·s to 0.8 Pa s, further preferably from 0.3 Pa·s to 0.5 Pa s.

Furthermore, it is preferably provided that the water-borne topcoat layer has a layer thickness in the range from 2 μm to 100 μm, preferably from 5 μm to 80 μm, further preferably from 15 μm to 50 μm. Through the choice of such a layer thickness, it is ensured that, on the one hand, a corresponding protection is provided and, on the other hand, the further processability of the transfer film is provided, and no delamination on the boundary surface of the water-borne topcoat layer and the other layers of the transfer ply results. Further, this also improves the resistance of the insert sheet, in particular the decorated injection-molded part, to mechanical and/or physical and/or chemical environmental influences as the water-borne topcoat layer may represent the outer layer of the insert sheet and/or the decorated injection-molded part.

It can also be provided that the water-borne topcoat layer comprises a water-borne acrylic binder or a water-borne polyurethane binder in the range from 10 wt.-% to 40 wt.-% and deionized water in the range from 50 wt.-% to 80 wt.-% and a leveling agent in the range from 0.1 wt.-% to 5 wt.-% and a defoamer in the range from 0.2 wt.-% to 3 wt.-%. This composition provides improved printability, especially for slot-die.

It is further preferably provided that the water-borne topcoat layer is applied by means of slot-die onto a surface of the carrier layer.

Moreover, it is preferably provided that during applying the water-borne topcoat layer the water-borne topcoat layer has a dynamic viscosity in range from 0.10 Pa·s to 1.0 Pa s, preferably from 0.2 Pa·s to 0.8 Pa s, further preferably from 0.3 Pa·s to 0.5 Pa s .

The at least one water-borne color layer can be formed as a single-layered or multi-layered water-borne color layer. This water-borne color layer preferably comprises one or more layers. It is preferably provided that the at least one water-borne color layer has a layer thickness in the range from 0.5 $\mu$m to 20 $\mu$m, preferably from 1 $\mu$m to 15 $\mu$m, further preferably from 1.5 $\mu$m to 7 $\mu$m. The at least one water-borne color layer can preferably have one or more water-borne color layers, in particular colored varnish layers. These water-borne color layers can in each case be dyed differently and/or can be formed transparent and/or opaque and can also be separated by one or more further layers, in particular transparent layers. The water-borne color layers can in each case be present over the whole surface or only partially in their layer plane. The water-borne color layers are preferably applied by means of known printing methods selected from: gravure printing, screen printing, offset printing, inkjet printing, pad printing, xerographic printing or combinations thereof. The water-borne color layers can consist of a binder and colorant and/or fillers and/or pigments, in particular also optically variable pigments and/or interference layer pigments and/or liquid-crystal pigments and/or magnetically orientable pigments and/or thermochromic pigments and/or metallic pigments. Further, the water-borne color layer can also comprise phosphorescent and/or luminescent dyes. The colorant can comprise color dyes and/or color pigments.

In the present context, transparent means in particular a region with a transmissivity in the wavelength range of light visible to the human observer, in particular from 380 nm to 780 nm, averaged over this wavelength range, of more than 50%, preferably more than 70%, particularly preferably more than 80%.

In the present context, opaque means in particular a region with a transmissivity in the wavelength range of light visible to the human observer, in particular from 380 nm to 780 nm, averaged over this wavelength range, of less than 40%, preferably less than 30%, particularly preferably less than 20%.

Moreover, it is preferably provided that the at least one water-borne color layer is responsible for the decorative aspect of the transfer film, in particular the insert sheet. It may be possible that the at least one water-borne color layer is arranged patterned. Patterned preferably means having one or more patterns. A pattern is in particular a graphically designed outline, a figurative representation, an image, a symbol, a logo, an endless pattern, a portrait, an alphanumeric character, a text, a gridding and/or the like or a combination of one or more of the above patterns.

It is further preferably provided that the at least one water-borne color layer or each water-borne color has a register tolerance in the range from -0.25 mm to +0.25 mm.

By register or registration, or register accuracy or registration accuracy, is meant a positional accuracy of two or more elements and/or layers relative to each other. The register accuracy is to vary within a predefined tolerance, which is to be as small as possible. At the same time, the register accuracy of several elements and/or layers relative to each other is an important feature in order to increase the process reliability. The positionally accurate positioning can be affected in particular by means of sensory, preferably optically detectable registration marks or register marks. These registration marks or register marks can either represent specific separate elements or areas or layers or themselves be part of the elements or areas or layers to be positioned.

It can be provided that the at least one water-borne color layer comprises a water-borne acrylic or a water-borne polyester or a water-borne polyurethane binder in the range from 20 wt.-% to 40 wt.-% and deionized water in the range from 60 wt.-% to 80 wt.-% and at least one color pigment in the range from 5 wt.-% to 20 wt.-% and a dispersing additive in the range from 0.5 wt.-% to 20 wt.-% and a leveling agent in the range from 0.1 wt.-% to 5 wt.-% and a defoamer in the range from 0.1 wt.-% to 5 wt.-%. This composition provides improved printability, especially for gravure printing.

It can be further provided that the at least one water-borne color layer is applied by means of gravure printing onto a surface of the carrier layer, preferably onto a top surface of the water-borne topcoat layer or the water borne tie-coat layer.

It may further be provided that during applying the at least one water-borne color layer the at least one water-borne color layer has a dynamic viscosity in range from 0.10 Pa·s to 1.0 Pa s, preferably from 0.2 Pa·s to 0.8 Pa s, further preferably from 0.3 Pa·s to 0.5 Pa s. Such a viscosity improves the printability of the at least one water-borne color layer.

It can also be advantageous when the at least one water-borne adhesive layer has a layer thickness in the range from 0.5 $\mu$m to 20 $\mu$m, preferably from 1 $\mu$m to 15 $\mu$m, further preferably from 1.5 $\mu$m to 7 $\mu$m.

Further, it can be provided that the at least one water-borne adhesive layer comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%. This composition provides improved printability, especially for gravure printing.

It can also be provided that the water-borne adhesive layer is applied by means of gravure printing onto a surface of the carrier layer, preferably onto a surface of the at least one water-borne color layer.

Furthermore, it is preferably provided that during applying the water-borne adhesive layer the water-borne adhesive layer has a dynamic viscosity in range from 0.10 Pa·s to 1.0 Pa s, preferably from 0.2 Pa·s to 0.8 Pa s, further preferably from 0.3 Pa·s to 0.5 Pa s.

Moreover, it may be provided that the water-borne topcoat layer and/or the water-borne tie-coat layer and/or the at least one water-borne color layer and/or the water-borne adhesive layer is applied with a printing speed in the range of 5 m/min to 200 m/min, preferably of 10 m/min to 100 m/min, further preferably of 15 m/min to 100 m/min. Preferably, such printing speeds can be realized on the basis of the compositions and the viscosities given above. Such high printing speeds increase throughput and thus efficiency.

After applying the layers of the transfer ply, it is preferably intended that they are dried. Preferably it is provided that the water-borne topcoat layer and/or the water-borne tie-coat layer and/or the at least one water-borne color layer and/or the water-borne adhesive layer is dried with a drying temperature in the range of 80°C to 200°C, preferably of 90°C to 180°C, further preferably of 100°C to 150°C. The drying of these layers ensures that the layers have sufficient adhesion to each other.

After the layers have dried, the transfer foil is produced as an intermediate product of the insert sheet. Depending on the application, the insert sheet can be produced on the customer's premises or directly downstream of the transfer film production.

As described above to preferably produce the insert sheet it is provided that the transfer ply of the transfer film should be transferred by means of heat laminating to the substrate of the insert sheet. It is preferably provided that the heat laminating is performed with a lamination speed in a range from 0.2 m/min to 60 m/min, preferably from 0.5 m/min to 40 m/min, further preferably from 1 m/min to 20 m/min.

Furthermore, it can be provided that the heat laminating is performed with a lamination temperature in a range from 90°C to 180°C, preferably from 80°C to 160°C, further preferably from 100°C to 150°C.

It may also be possible that the heat laminating is performed with a lamination pressure in a range from 5 bar to 100 bar, preferably from 10 bar to 90 bar, further preferably from 20 bar to 60 bar.

It may be possible that during heat lamination, the layers of the transfer ply lose toughness due to heat exposure and therefore become deformable and flexible. This is advantageous for the subsequent forming or deep drawing of the insert sheet. The layers of the transfer sheet can then withstand the sometimes severe stretching and compression without cracking or wrinkling. The result is a high-quality, uniform decoration on the insert sheet. However, it is preferably necessary that the method further comprises the following step:

- curing the transfer ply, preferably the water-borne topcoat layer and/or the water-borne tie-coat layer and/or the at least one water-borne color layer and/or the water-borne adhesive layer, by means of UV-radiation, preferably after forming or deep drawing of the substrate or insert sheet.

Curing ensures that the layers have sufficient adhesion to each other and are resistant to external environmental influences.

Moreover, it can be possible that the method further comprises the following step:

- detaching the carrier layer.

Preferably, the carrier layer can be detached before the insert sheet is deep-drawn or formed, or after the insert sheet has been deep-drawn or formed.

As mentioned at the beginning, the automotive industry places high demands on decorated injection molded parts for interior components, for example. It is therefore preferable for the insert sheet or the decorated injection molded part to meet these requirements. This is preferably demonstrated in appropriate tests, which are described below.

An injection molded part decorated with an insert sheet according to the invention was used for all subsequent tests. This means that all layers of the insert sheet are in the cured state. However, it is also possible to use only the non-back-injected insert sheet for the tests. For reasons of easier handling, however, it was decided to carry out the tests on an appropriately decorated injection molded part.

As mentioned at the beginning, VOC (= volatile organic compounds) should be reduced or avoided in transfer films and/or insert sheets and/or decorated molded parts.

For measuring the VOC a gas chromatograph with FID-detector (flame ionization detector) or mass spectrograph, e.g. Thermo Fisher GC-MS system consisting ISQ QD & Trace 1300 GC including Combi PAL auto sampler, is used. Moreover, the gas chromatograph comprises a wall coated open tubular (WCOT) with a length of 30 m, an internal diameter of 0.25 mm and a film thickness of 0.25 $\mu$m, for example Zebron ZB-WAX.

Samples of an insert sheet and/or transfer film are broken into small pieces weighing above 10 mg but below 25 mg. It is preferably recommended to use an analytical balance with a precision of at least 0.1 mg. Those pieces are weighed to 2.000 g $\pm$ 0.001 g into headspace vials of 20 ml cubic capacity. For each sample three headspace vials have to be prepared and measured.

Prior to measure the headspace vials including the samples are conditioned in the gas chromatography furnace for 5 hours $\pm$ 5 minutes at a temperature of 120°C into the headspace sampling vial in order to enrich the vial with the substances contained in the sample. Immediately afterwards the vials shall be analyzed. At least three samples shall be analyzed. It must be ensured that the dosages are identical and reproducible for all samples analyses, blank vial and calibration solution.

The samples are measured under the following test conditions. At first a constant temperature in the gas chromatography mass spectrometry furnace of 50°C for 3 minutes is maintained. Such a furnace is an oven for conditioning the samples. Then, the temperature is heated up to 200°C with the ratio of 12°C/min. Once the temperature of 200°C has been reached, the temperature will be maintained for 4 minutes. The injection port temperature amounts 200°C and the detector temperature is 250°C. The split ratio is about 1:20. As carrier gas helium and nitrogen is used with gas speed in the range of 22 cm/s to 27 cm/s. The carrier gases are injected separately and define a mixture in the furnace.

Calibrating characteristics according to the external standard method is drawn up for quantitative determination of total carbon emission as well as for determination of the amount of specific individual substances.

Acetone serves as calibrating substance for total carbon emission, for the individual substances the substances themselves shall be used.

General calibration with seven calibration solutions shall be performed both after installing a new column in the gas chromatography furnace and after each modification of this device. Additionally, a check calibration shall be performed at least four weeks with at least three solutions.

The preparation of the calibration solution is made of acetone and n-Butanol. It is preferred that the seven calibration solutions have a concentration being 0.1 g, 0.5 g, 1 g, 5 g, 10 g, 50 g and 100 g acetone per liter in n-butanol as the calibration sample. At least three solutions with 0.5 g, 5 g and 50 g acetone per liter shall be used for check calibration. Prior to check calibration it shall be ensured that there are no peaks occurring for n-butanol and acetone at the same time.

All substances used during calibration shall at least have regent-grade quality.

While calibration measuring, a 10 $\mu$l injector is used to obtain 4 $\mu$l $\pm$ 0.2 $\mu$l solution (from the lowest concentration) to inject into a 20 ml empty headspace vial and sealed with polytetrafluoroethylene immediately. It should be noted that there should be no bubbles in the injector and each calibration solution requires at least three vials.

After that, the vials with the calibration solution are subjected to a temperature treatment at a constant temperature of 120°C and a duration of 1 hour. Then the calibrated samples are analyzed by mass spectrometry and recorded by means of computer. Each sample generates a respective peak in the spectrum. Each peak has a certain width and a certain height which does together define a peak area for each calibrated sample. The values of the areas from each peak area from the calibration solutions are then drawn in a second diagram with peak areas on one axis (Y) and the different concentrations of acetone from the calibration solutions on the other axis (X).

A straight linear line is then drawn in this second diagram of acetone peak areas against the concentrations of calibration solutions (in g/l). This drawn straight idealized line defines the calibration curve. Additionally, during the computer analysis a correlation coefficient (R) is automatically obtained, which must be above 0.995, otherwise another calibration is needed. The inclination of the drawn straight line represents a calibration coefficient k, which represents the total carbon emission and k(i) represents the individual substance emission. The coefficient k has the unit $\frac{counts \cdot min}{g/l}$.

The overall emanation value of carbon EG (in $\mu$g C/g$_{sample}$) is preferably calculated by the equation

$$EG = \frac{A_1 - A_2}{k} \cdot 2 \cdot 0.6204$$

wherein $A_1$ is the overall peak value area. $A_2$ is the peak value area baseline value, which is a blank value peak area, which is determined according to the average value composed of signal values of an empty glass vial measured three times. In other words, $A_2$ indicates the standard value for the mass of carbon preferably contained in the ambient air. Whereas, $A_1$ indicates the value for the mass of carbon contained in the sample and the ambient air. Both, $A_1$ and $A_2$ have the unit *counts · min.* Moreover, k is the correlation coefficient for the total carbon emission, and "2" is a coefficient related to the sample mass. Thus, the coefficient "2" indicates that 2 $\mu$l of the calibrated solution is injected into a headspace vial per gram of sample Therefore, the coefficient "2" has the unit $\mu l / g$. The coefficient 0.6204 indicates the content of carbon in acetone. The content of carbon in acetone is calculated by the following equation:

$$\frac{M_{Carbon\ in\ Acetone}}{M_{Aceton}} = \frac{M_{C_3}}{M_{C_3H_6O}} = \frac{3 \cdot 12.0107 \frac{g}{mol}}{3 \cdot 12.0107 \frac{g}{mol} + 6 \cdot 1.00794 \frac{g}{mol} + 15.9994 \frac{g}{mol}}$$

$$\approx 0.6204$$

In particular, it has advantageously been shown that the insert sheet, in particular the transfer film or decorated molded part, has an emanation value of carbon EG equal to or lower than 40 $\mu$g C/g$_{sample}$, preferably determined according to VW interior spec TL226. Moreover, it is preferably provided, that at least three samples have to be tested.

The overall emanation value Ei (in $\mu$g/g) is preferably calculated by the equation

$$Ei = \frac{B}{k(i)} \cdot 2$$

wherein B is the peak value area of analytical individual substance sample i, k(i) is the correlation coefficient of individual substance and "2" is a coefficient related to the sample mass. Thus, the coefficient "2" indicates that 2 $\mu$l of the calibrated solution is injected into a headspace vial per gram of sample. Therefore, the coefficient "2" has the unit $\mu l/g$.

For the smell test, a specimen of the insert sheet is stored for 2 hours in a 1 liter preserving glass at 80°C. The specimen, for example, has a length of 18.8 cm and a width of 11 cm. Then the specimen is taken out and let rest for 5 minutes. Afterwards the specimen is tested by three different people independently for the intensity of the smell of the specimen. The evaluation is given according to the PV3900 scale as given below:

| Level | Rating |
|---|---|
| 1 | Not observable |
| 2 | Observable, undisturbing |
| 3 | Clearly observable, but not yet disturbing |
| 4 | Disturbing |
| 5 | Strongly disturbing |
| 6 | Unbearable |

In particular, it has advantageously been shown that the insert sheet, in particular the decorated molded part, has a smell test result in the levels of 2 to 3 according to PV3900 scale determined according to VW interior spec TL226.

For the cream test and sun lotion test, a surface of a specimen, in particular the insert sheet and/or the decorated molded part, is covered with a gauze, wherein for each, the cream and the sun lotion test, different specimen are used. The gauze is preferably a cotton gauze (20-count). For each specimen the cream or sun lotion is applied onto the gauze and pressed to the gauze such that the cream or sun lotion is evenly and fully fills the gaps in the gauze. For the cream and sun lotion a common test box with several test creams named Thierry PV 3964 is used. After the cream or sun lotion have applied the specimens with gauze are put into an air circulation oven at a temperature of 80 $\pm$ 2°C for 24 hours. Afterwards the gauze is removed and the surface of the specimens are cleaned such that the cream or sun lotion are fully removed.

Afterwards the specimen and the original insert sheet, in particular decorated molded part, are evaluated according to the grayscale test and/or the vision and haptic characteristics test and/or the cross-cut test and/or the scratch resistance test as described below. To pass the cream and sun lotion test each of the above-named tests should be passed.

In particular, it has advantageously been shown that the insert sheet, in particular the decorated molded part, has a passed cream and sun lotion test determined according to VW interior spec TL226.

For the hydrolysis test, a specimen, in particular the insert sheet and/or the decorated molded part, is placed in a hydrolysis test chamber, for example a high-low temperature humidity and thermal chamber, especially the type PRO C/340/70/3 from Weiss Technik GmbH, 35447 Reiskirchen, Germany and is aged for a duration time of 72 hours under a temperature of 90 $\pm$ 2°C and a relative humidity equal to or greater than 95%.

Afterwards the specimen and the original insert sheet, in particular decorated molded part, are evaluated according to the grayscale test and/or the vision and haptic characteristics test and/or the cross-cut test and/or the scratch resistance test as described below. To pass the hydrolysis test each of the above-named tests should be passed.

In particular, it has advantageously been shown that the insert sheet, in particular the decorated molded part, has a passed hydrolysis test determined according to VW interior spec TL226.

For the light fastness test, a specimen, in particular the insert sheet and/or the decorated molded part, is placed in a xenon lamp weathering test chamber, for example a "Xenotest Beta +" from Atlas Material Testing Technology GmbH, 63589 Linsengericht-Altenhasslau, Germany. In the test chamber also a filter, for example a Xenochrom 320 filter is placed in the test chamber, such that the filter surrounds the specimen. The black standard temperature is set to $100 \pm 3°C$ and the specimen room temperature is set to $65 \pm 3°C$. Moreover, the relative humidity is set to $20 \pm 10\%$. The specimen is radiated with a radiation strength of $60\ W/m^2$ measured at a wavelength range from 300 nm to 400 nm for a duration time of 320 hours.

Afterwards the specimen and the original insert sheet, in particular decorated molded part, are evaluated according to the grayscale test and/or the vision and haptic characteristics test and/or the cross-cut test and/or the scratch resistance test as described below. To pass the light-fastness test each of the above-named tests should be passed.

In particular, it has advantageously been shown that the insert sheet, in particular the decorated molded part, has a passed light-fastness test determined according to VW interior spec TL226.

Moreover, it is preferably provided that the insert sheet, in particular the decorated molded part, has a grayscale rating of equal to or greater than 4 for the cream test and/or sun lotion test and/or hydrolysis test and/or light-fastness test determined according to DIN EN 20105-A02. The grayscale test detects color changes. For this purpose, a precise colorimetric specification of the scale is given as a permanent record. The essential, or 5-step, scale consists of five pairs of non-glossy gray color chips, which illustrate the perceived color differences corresponding to fastness ratings 5, 4, 3, 2 and 1. This essential scale may be augmented by the provision of similar chips or swatches illustrating the perceived color differences corresponding to the half-step fastness ratings 4-5, 3-4, 2-3 and 1-2, such scales being termed 9-step scales. In the present case, the 9-step scale has been used. The first member of each pair is neutral gray in color and the second member of the pair illustrating fastness rating 5 is identical with the first member. the second members of the remaining pairs are increasingly lighter in color so that each pair illustrates increasing contrasts or perceived color differences which are defined colorimetrically. The full colorimetric specification is given in the table below:

| Fastness grade | CIELAB difference | Tolerance |
|---|---|---|
| 5 | 0 | 0,2 |
| 4-5 | 0,8 | ±0,2 |
| 4 | 1,7 | ±0,3 |
| 3-4 | 2,5 | ±0,35 |
| 3 | 3,4 | ±0,4 |
| 2-3 | 4,8 | ±0,5 |
| 2 | 6,8 | ±0,6 |
| 1-2 | 9,6 | ±0,7 |
| 1 | 13,6 | ±1,0 |

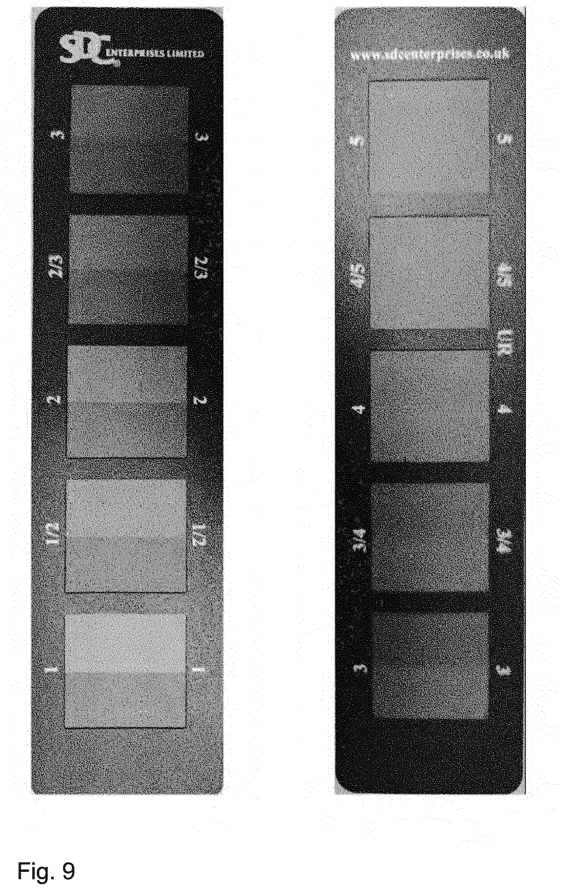

Moreover, reference is made to Fig. 9, wherein the grayscale is shown. For example, a rating of five is given only when there is no perceived difference between the tested specimen and the original material.

The specimen shall be in neutral gray in color and has been measured with a spectrophotometer with the specular component included. The colorimetric data has been calculated by using CIE 1964 supplementary standard colorimetric system for illuminant D65.

A piece of the original insert sheet, in particular decorated molded part, is placed side by side to the tested specimen in the same plane and oriented in the same direction. The grayscale is placed nearby in the same plane. The standard illuminant D65 in the light cabinet is arranged incident upon the surface at approximately 45°. The direction of viewing is approximately perpendicular to the plane of the surfaces. The distance is about 50 cm between the eyes of the observer and the specimen, in particular the insert sheet and/or the decorated molded part. The differences between the original insert sheet, in particular decorated molded part, and the tested specimen are evaluated in view of the grayscale.

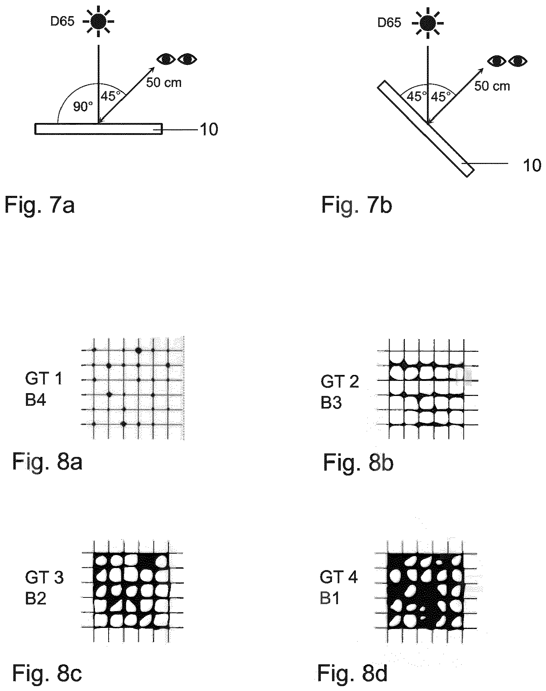

Moreover, it is preferably provided that the insert sheet, in particular the decorated molded part, has a passed vision and characteristics test for the cream test and/or sun lotion test and/or hydrolysis test and/or light-fastness determined according to VW interior spec TL 226. For this purpose, for each of cream test and/or sun lotion test and/or hydrolysis test and/or light fastness a visual evaluation is performed at a distance of 50 cm between the eyes of the observer and the specimen, preferably the insert sheet or the decorated molded part, under standard illuminant D65 in a light cabinet. The specimen is viewed under two different angular positions relative to the light source, namely the angled view (see Fig. 7a) and the top view (see Fig. 7b). It has been shown that no change to visual appearance or tactile properties compared to the untested specimen occurred. For example, no cracks, no blisters, no color shift, no fogging, no delamination, no softening and no deformation occurred.

In particular, it has advantageously been shown that, during a test of the adhesive strength, the adhesive strength measured on the surface of the test region according to DIN EN ISO 2409: 2013-06 lies in the range of from GT0 to GT1 and/or according to ASTM D 3359 - 09, preferably Test Method B, in the range of from 5B to 4B, preferably wherein the water-borne topcoat layer is completely cured.

The adhesive strength is determined in particular with a cross-cut test according to DIN EN ISO 2409: 2013-06, preferably according to the German version of DIN EN ISO 2409: 2013-0 (Beschichtungsstoffe - Gitterschnittprüfung [Paints and varnishes - Cross-cut test] with the issue date 2013-06). In particular, in each case 6 cuts are made vertically and 6 cuts are made horizontally and/or 6 cuts running parallel at an angle of 90° to 6 further cuts running parallel in the at least one coating, here preferably using a knife and preferably using a stencil. The cuts in particular also penetrate the water-borne topcoat layer, preferably with a depth up to the thichkness of the transfer ply and/or are cut up to the molded part. The cut width is in particular chosen depending on the layer thickness of the water-borne topcoat layer, in particular the thickness of the transfer ply.

In the case of a layer thickness of the water-borne topcoat layer, in particular the thickness of the transfer ply, with a layer thickness of less than 60 $\mu$m, the distance between the cuts is preferably approximately 1 mm.

In particular in a top view of the water-borne topcoat layer, the cuts are preferably introduced in a measurement area, preferably in the shape of a square, which completely comprises the surface of the test region. The measurement area preferably herewith comprises the at least one coating at least over part of the surface. A clear adhesive tape or an adhesive crepe tape, in particular with an adhesiveness in a range of from 6 N/25 mm to 10 N/25 mm, is preferably stuck to the surface in the test region. The clear adhesive tape or the adhesive crepe tape is in particular peeled off the surface, preferably at an angle of 60°, in a period of from 0.5 s to 1 s after sticking.

The evaluation is effected in particular by a visual assessment of the surface of the test region and classification into cross-cut characteristic values of from 0 (very good adhesive strength) to 5 (very poor adhesive strength), which are preferably abbreviated to GT 0 to GT 5.

Alternatively or additionally, it is possible to determine the adhesive strength according to ASTM D 3359 - 09, Test Method B.

The criteria for a classification of the corresponding characteristic values are preferably to be found in the table below, in particular wherein possible surfaces of the test region are shown schematically with Fig. 8a), Fig. 8b), Fig. 8c) and Fig. 8d):

| Description | Surface of the test region | ISO characteristic value | ASTM characteristic value |
|---|---|---|---|
| The edges of the cuts are completely smooth, no section of the coating has flaked. | - | GT 0 | 5B |
| Small flakes of the coating have detached at the intersections of the grid lines; flaked area approximately 5% of the sections. | Fig. 8a) | GT 1 | 4B |
| The coating has flaked along the edges of the cuts and/or at the intersections of the grid lines; flaked area approximately 15% of the sections. | Fig. 8b) | GT 2 | 3B |
| The coating has flaked partially or completely in broad strips along the edges of the cuts and/or the coating has flaked completely or partially on individual sections; flaked area approximately 35% of the sections. | Fig. 8c) | GT 3 | 2B |
| The coating has flaked in broad strips along the edges of the cuts and/or completely or partially on individual sections; flaked area approximately 65% of the sections. | Fig. 8d) | GT 4 | 1B |

(continued)

| Description | Surface of the test region | ISO characteristic value | ASTM characteristic value |
|---|---|---|---|
| Flaked area more than 65% of the sections. | - | GT 5 | 0B |

In a range of from GT 0 to GT 1 and/or from 5B to 4B thus preferably means that an area of at most 5% has flaked.

Moreover, it is preferably provided that the insert sheet, in particular the decorated molded part, has an adhesion test value ISO in the range from GT0 to GT1 for the cream test and/or sun lotion test and/or hydrolysis test and/or light-fastness determined by cross cutting according to DIN EN ISO 2409:2013-06.

In particular, it has advantageously been shown that the insert sheet, in particular the decorated molded part, has a passed scratch resistance test for the cream test and/or sun lotion test and/or hydrolysis test and/or light-fastness determined according to VW interior spec TL226. For the scratch resistance test an Erichsen hardness test pencil type 318 or type 318 S (produced by Erichsen GmbH & Co. KG, 58675 Hemer, Germany) with a 10-N load and a Bosch test tip (diameter 0.75 mm) is used. For each of cream test and/or sun lotion test and/or hydrolysis test and/or light-fastness it has been shown that no tear-off of the paintwork appears. Moreover, any trace of indentation caused by loading the substrate, for example the insert sheet and/or the decorated molded part, is permissible.

Moreover, it is preferably provided that the insert sheet has a passed cream test and/or sun lotion test and/or hydrolysis test and/or light-fastness test determined according to VW interior spec TL226.

It has been shown that the insert sheet according to the invention passes all requirements of the automotive industry. Furthermore, it has been proved that the water-borne layers have nearly the same or even better resistance than conventionally used solvent-borne layers. For example, the comparison between conventionally insert sheets with solvent-borne layers and the insert sheet having water-borne layers according to the invention is shown in the table below.

| Test | Conventionally insert sheet with solvent-borne layers | Insert sheet according to the invention having water-borne layers |
|---|---|---|
| VOC | 100 $\mu$g C/g | 40 $\mu$0 C/g$_{sample}$ |
| Smell test | Level 4 | Level 2-3 |
| Cream test | passed | passed |
| Sun lotion test | passed | passed |
| Hydrolysis test | passed | passed |
| Light fastness test | passed | passed |

As can be seen for the VOC test the water-borne insert sheet reaches a better value. The lower the value of the VOC test is, the better and environmentally friendly the insert sheet is. Furthermore, also for the smell-test the water-borne insert sheet according to the invention has a better performance than the conventionally insert sheet with solvent borne layers.

The transfer film according to the invention, the insert sheet according to the invention and the process for producing an insert sheet according to the invention are used, for example, in the automotive sector, in particular for cockpit components, panels, armatures, etc.

Further embodiments of the invention are represented in the figures and described below. The embodiments shown are therefore not to be understood as restrictive.

Fig. 1          shows a schematic representation of a transfer film

Fig. 2          shows a schematic representation of a transfer film applied to a substrate

Fig. 3          shows a schematic representation of an insert sheet

Fig. 4          shows another schematic representation of a transfer film

Fig. 5          shows another schematic representation of a transfer film applied to a substrate

Fig. 6          shows another schematic representation of an insert sheet

Fig. 7a, 7b     show a schematic representation of the two different observing positions for the vision and haptic characteristics test

Fig. 8a - 8d    show a schematic representation of a test region in a cross-cut test

Fig. 9          shows the 9-step grayscale used in the grayscale test

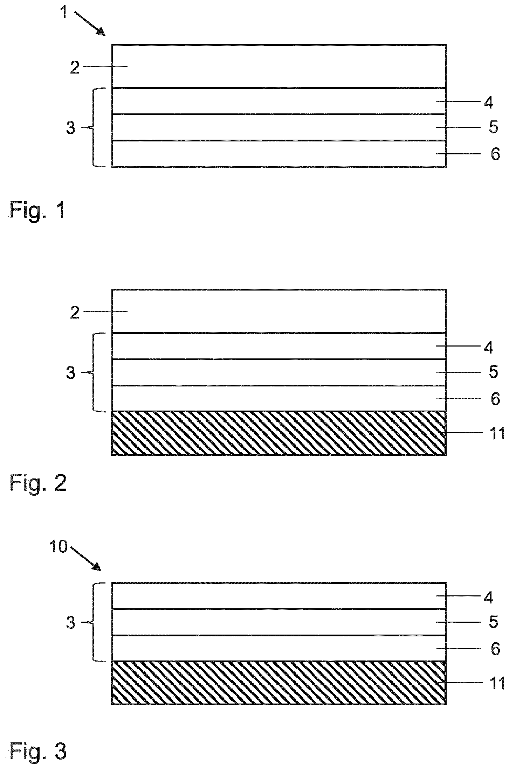

Figure 1 shows a schematic representation of a transfer film 1. Such a transfer film 1 is used, for example, for decorating insert sheets 10, which are used in the so-called insert molding process. In insert molding, a previously formed insert sheet 10 is inserted into an injection mold and back-injected with an injection molding compound to obtain a decorated injection molded part. By using an insert sheet 10, injection molded parts with complex geometries can be decorated.

The transfer film 1 according to Fig. 1 comprises a carrier layer 2 and a transfer ply 3, wherein the transfer ply 3 comprises, in the following sequence arranged on the carrier layer 2, a water-borne topcoat layer 4, a water-borne color layer 5 and a water-borne adhesive layer 6. Such a transfer ply 3 comprising solely water-borne layers offers the great advantage that harmful or unhealthy solvents can be avoided. As a rule, when layers containing solvents are used, the solvents or volatile organic compounds can diffuse through the layers and thus enter the ambient air, where they can be inhaled by people, for example. Water-borne coatings are therefore more environmentally friendly and more health-friendly than solvent-borne coatings.

Preferably the carrier layer 2 comprises PET as material and has a layer thickness in the range from 3 $\mu$m to 300 $\mu$m.

Advantageously, the water-borne topcoat layer 4 has a layer thickness in the range from 2 $\mu$m to 100 $\mu$m, preferably from 5 $\mu$m to 80 $\mu$m, further preferably from 15 $\mu$m to 50 $\mu$m. The water-borne topcoat layer 4 serves as a kind of protective layer for the underlying decorative layers, such as the water-borne color layer 5. After the transfer ply 3 of the transfer film 1 has been applied to the insert sheet 10 and the carrier layer 2 has been removed, the water-borne topcoat layer 4 represents the outermost layer of the layer structure. Preferably, the topcoat layer 4 has a certain resistance to mechanical and/or chemical and/or physical environmental influences.

Preferably, the water-borne topcoat layer 4 comprises a water-borne acrylic binder or a water-borne polyurethane binder in the range from 10 wt.-% to 40 wt.-% and deionized water in the range from 50 wt.-% to 80 wt.-% and a leveling agent in the range from 0.1 wt.-% to 5 wt.-% and a defoamer in the range from 0.2 wt.-% to 3 wt.-%.

Advantageously, the water-borne topcoat layer 4 is applied by means of slot-die onto a surface of the carrier layer 2. Therefore, during the producing process of the transfer film 1, in particular of the insert sheet 10, preferably at first a carrier layer 2 is provided and afterwards the water-borne topcoat layer 4 is printed onto a surface of the carrier layer 2.

It may be provided that during applying the water-borne topcoat layer 4 the water-borne topcoat layer 4 has a dynamic viscosity in range from 0.10 Pa·s to 1.0 Pa s, preferably from 0.2 Pa·s to 0.8 Pa s, further preferably from 0.3 Pa·s to 0.5 Pa s.

At next in the producing process of the transfer film 1, in particular of the insert sheet 10, it may be provided that the at least one water-borne color layer 5 is applied by means of gravure printing onto a surface of the carrier layer 2, preferably onto a top surface of the water-borne topcoat layer 4. It may be provided that only one water-borne color layer 5 or probably several water-borne color layers 5 are applied.

Moreover, it is preferably provided, that during applying the at least one water-borne color layer 5 the at least one water-borne color layer 5 has a dynamic viscosity in range from 0.10 Pa·s to 1.0 Pa·s, preferably from 0.2 Pa·s to 0.8 Pa s, further preferably from 0.3 Pa·s to 0.5 Pa s.

In particular, the at least one water-borne color layer 5 comprises a water-borne acrylic or a water-borne polyester or a water-borne polyurethane binder in the range from 20 wt.-% to 40 wt.-% and deionized water in the range from 60 wt.-% to 80 wt.-% and at least one color pigment in the range from 5 wt.-% to 20 wt.-% and a dispersing additive in the range from 0,5 wt.-% to 20 wt.-% and a leveling agent in the range from 0.1 wt.-% to 5 wt.-% and a defoamer in the range from 0.1 wt.-% to 5 wt.-%.

Moreover, it is further preferred, that the at least one water-borne color layer 5 has a register tolerance in the range from -0.25 mm to +0.25 mm.

Preferably, the water-borne adhesive layer 6 is applied after the at least one water-borne color layer 5. For example, the water-borne adhesive layer 6 is applied by means of gravure printing onto a surface of the carrier layer 2, preferably onto a surface of the at least one water-borne color layer 5.

Advantageously, during applying the water-borne adhesive layer 6 the water-borne adhesive layer 6 has a dynamic viscosity in range from 0.10 Pa s to 1.0 Pa s, preferably from 0.2 Pa s to 0.8 Pa s, further preferably from 0.3 Pa·s to 0.5 Pa s.

Moreover, it is preferably provided, that the at least one water-borne color layer 5 has a layer thickness in the range from 0.5 $\mu$m to 20 $\mu$m, preferably from 1 $\mu$m to 15 $\mu$m, further preferably from 1.5 $\mu$m to 7 $\mu$m.

Preferably, the at least one water-borne adhesive layer 6 comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

Figure 2 shows a schematic representation of a transfer film 1 applied to a substrate 11. For this purpose, at first a substrate 11 may be provided and at next the transfer ply 3 of the transfer film 1 might be heat laminated onto a surface of the substrate 11, in particular wherein the water-borne adhesive layer 6 is directly adjoined to the surface of the substrate 11.

Preferably, the heat laminating is performed with a lamination speed in a range from 0.2 m/min to 60 m/min, preferably from 0.5 m/min to 40 m/min, further preferably from 1 m/min to 20 m/min.

In particular the heat laminating is performed with a lamination temperature in a range from 90°C to 180°C, preferably from 80°C to 160°C, further preferably from 100°C to 150°C.

Moreover, it is preferably provided that the heat laminating is performed with a lamination pressure in a range from 5 bar to 100 bar, preferably from 10 bar to 90 bar, further preferably from 20 bar to 60 bar.

Figure 3 shows a schematic representation of an insert sheet 10. The insert sheet 10 is preferably a multilayer body comprising the substrate 11 and the transfer ply 3 of the transfer film 1. In contrast to the illustration shown in Fig. 2, the insert sheet 10 no longer has a carrier layer 2. Preferably is provided, that the method further comprises the following step:

- detaching the carrier layer 2.

Moreover, it is preferably provided that the substrate 11 comprises a material or a combination of materials, individually or in combination as a laminate, co-extrusion or mixture, selected from: ABS, PC, PPA, POM, PMMA, PP. As a rule, an insert sheet 10 is formed and then back-injected with a plastic compound in an injection mold. Preferably, the substrate 11 of the insert sheet 10 is made of a similar material to the plastic compound.

In particular the substrate 11 has a layer thickness in the range from 200 $\mu$m to 750 $\mu$m, preferably from 350 $\mu$m to 500 $\mu$m. Such a layer thickness ensures that the insert sheet 10 has sufficient stability, especially against the high pressures inside the injection mold, and is also flexible enough to allow the insert sheet 10 to be formed before back injection.

For the application of such an insert sheet 10 for decoration purposes in the automotive industry, e.g. as cockpit cover, a large number of requirements must be met. These relate, for example, to mechanical, physical and chemical resistance as well as visual appearance.

For example, it is provided that the insert sheet 10 has an emanation value of carbon EG equal to or lower than 40 $\mu$g C/g$_{sample}$, preferably determined according to VW interior spec TL226. This means that very few VOCs can diffuse through the layers of the insert sheet 10. On the one hand, this is due to the fact that the layers of the insert sheet 10 are water-borne and therefore do not contain any solvents, which usually fall under VOC. And secondly, this is because the water-borne topcoat layer 4 has a high resistance to diffusion, so that diffusion of VOCs is reduced. The less solvents diffuse through the insert sheet 10 or the layers of the insert sheet 10, the better this is for the environment and also the health of the driver.

Furthermore, it is preferably provided that the insert sheet 10 has a smell test result in the levels of 2 to 3 according to PV3900 scale determined according to VW interior spec TL226. As described above, in the odor text, three testers subjectively test the smell of the insert sheet 10 for intensity and rate it on a scale of 1 to 6, where 1 is not observable and 6 is unbearable.

Preferably the insert sheet 10 has a passed cream test and/or sun lotion test and/or hydrolysis test and/or light-fastness test determined according to VW interior spec TL226. To pass each of the tests listed above, the samples are tested for gray scale, optical appearance, adhesion and scratch resistance for each test.

In particular the insert sheet 10 has a grey scale rating of equal to or greater than 4 for the cream test and/or sun lotion test and/or hydrolysis test and/or light-fastness test determined according to DIN EN 20105-A02.

Moreover, it is preferably provided that the insert sheet 10 has a passed vision and characteristics test for the cream test and/or sun lotion test and/or hydrolysis test and/or light-fastness determined according to VW interior spec TL 226.

Further preferably it is provided the insert sheet 10 has an adhesion test value ISO in the range from GT0 to GT1 for the cream test and/or sun lotion test and/or hydrolysis test and/or light-fastness determined by cross cutting according to DIN EN ISO 2409:2013-06.

Preferably the insert sheet 10 has a passed scratch resistance test for the cream test and/or sun lotion test and/or hydrolysis test and/or light-fastness determined according to VW interior spec TL226.

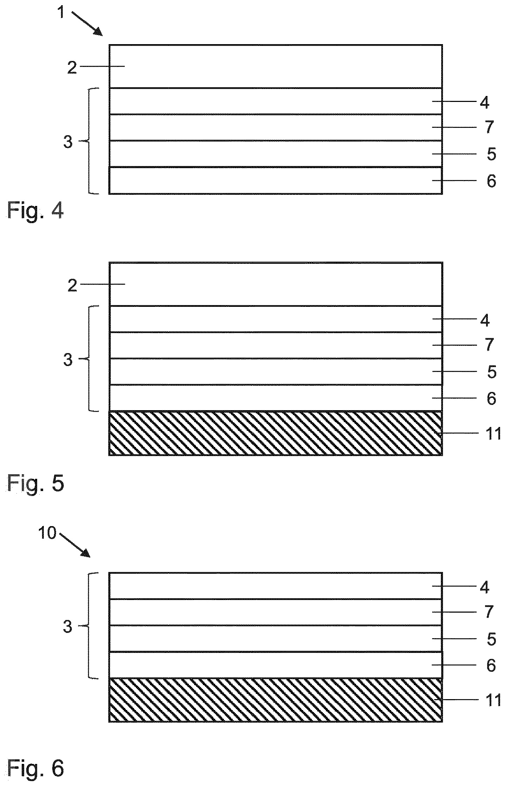

Figure 4 shows an alternative embodiment of a transfer film 1 which essentially corresponds to the structure of the transfer film 1 according to Fig. 1, but with the difference that the transfer film 1 comprises a water-borne tie-coat layer 7, which is arranged between the water-borne topcoat layer 4 and the at least one water-borne color layer 5.

It is preferably provided that the water-borne tie-coat layer 7 has a layer thickness in the range from 0.5 $\mu$m to 20 $\mu$m, preferably from 1 $\mu$m to 15 $\mu$m, further preferably from 1.5 $\mu$m to 7 $\mu$m.

In particular, the water-borne tie-coat layer 7 comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

Preferably, during the method for producing the transfer film 1, in particular the insert sheet 10, the water-borne tie-coat layer 7 is applied by means of gravure printing onto a surface of the carrier layer 2, preferably onto a surface of the water-borne topcoat layer 4.

Moreover, preferably during applying the water-borne tie-coat layer 7 the water-borne tie-coat layer 7 has a dynamic viscosity in range from 0.10 Pa·s to 1.0 Pa s, preferably from 0.2 Pa·s to 0.8 Pa s, further preferably from 0.3 Pa·s to 0.5 Pa s.

It is moreover further preferably provided that the water-borne topcoat layer 4 and/or the water-borne tie-coat layer 7 and/or the at least one water-borne color layer 5 and/or the water-borne adhesive layer 6 is applied with a printing speed in the range of 5 m/min to 200 m/min, preferably of 10 m/min to 100 m/min, further preferably of 15 m/min to 100 m/min.

It also may possible that the water-borne topcoat layer 4 and/or the water-borne tie-coat layer 7 and/or the at least one water-borne color layer 5 and/or the water-borne adhesive layer 6 is dried with a drying temperature in the range of 80°C to 200°C, preferably of 90°C to 180°C, further preferably of 100°C to 150°C.

Figure 5 shows another schematic representation of a transfer film 1 applied to a substrate 11. In Figure 5 the transfer film 1 described with respect to Figure 4 is applied to the substrate 11. After applying the transfer film 1, in particular the transfer ply 3, to the substrate 11 it is preferably provided that the method further comprises the following step:

- curing the transfer ply 3, preferably the water-borne topcoat layer 4 and/or the water-borne tie-coat layer 7 and/or the at least one water-borne color layer 5 and/or the water-borne adhesive layer 6, by means of UV-radiation, preferably after forming or deep drawing of the substrate or insert sheet.

Before the transfer film 1 is applied to the substrate 11, the layers of the transfer ply 3 are in an uncured state or in a pre-cured state. This is characterized by the fact that the layers have a sufficiently high viscosity that they cannot flow, but are still deformable. The deformability of the individual layers is therefore important, since the insert sheet 10 is later formed and no cracks should occur in the decoration, especially the transfer ply 3, during forming. Preferably, the insert sheet 10 or the transfer ply 3 is cured after forming.

Figure 6 shows an alternative embodiment of an insert sheet 10 which essentially corresponds to the structure of the insert sheet 10 according to Fig. 3, but with the difference that the insert sheet 10 comprises a water-borne tie-coat layer 7, which is arranged between the water-borne topcoat layer 4 and the at least one water-borne color layer 5.

Figure 7 show a schematic representation of the two different observing positions for the vision and haptic characteristics test as described above.

In Figures 8a to 8d a schematic representation of a test region in a cross-cut test is shown. The cross-cut test is described in detail above.

Figure 8a shows the surface corresponding to the ISO characteristic value GT1 and to the ASTM characteristic value 4B. As can be seen, small flakes of the coating have detached at the intersections of the grid lines. The flaked area is approximately 5% of the sections.

Figure 8b shows the surface corresponding to the ISO characteristic value GT2 and to the ASTM characteristic value 3B. As can be seen the coating has flaked along the edges of the cuts and/or at the intersections of the grid lines. The flaked area is approximately 15% of the sections.

Figure 8c shows the surface corresponding to the ISO characteristic value GT3 and to the ASTM characteristic value 2B. As can be seen the coating has flaked partially or completely in broad strips along the edges of the cuts and/or the coating has flaked completely or partially on individual sections. The flaked area is approximately 35% of the sections.

Figure 8d shows the surface corresponding to the ISO characteristic value GT4 and to the ASTM characteristic value 1B. As can be seen the coating has flaked in broad strips along the edges of the cuts and/or completely or partially on individual sections. The flaked area is approximately 65% of the sections.

Figure 9 shows the 9-step grayscale used in the grayscale test as described above.

List of reference numbers

**[0150]**

1    Transfer film
2    Carrier layer
3    Transfer ply
4    Water-borne topcoat layer
5    Water-borne color layer
6    Water-borne adhesive layer
7    Water-borne tie-coat layer

10    Insert sheet
11    Substrate

**Claims**

1.  Insert sheet (10) comprising a substrate (11) and a transfer ply (3) of a transfer film (1) applied to the substrate (11), wherein the transfer ply (3) comprises, in particular in the following sequence arranged on the substrate (11), at least one water-borne adhesive layer (6), at least one water-borne color layer (5) and a water-borne topcoat layer (4).

2.  Insert sheet (10) according to claim 1,
    **characterized in that**

    the substrate (11) comprises a material or a combination of materials, individually or in combination as a laminate, co-extrusion or mixture, selected from: ABS, PC, PPA, POM, PMMA, PP;
    and/or the substrate (11) has a layer thickness in the range from 200 $\mu$m to 750 $\mu$m, preferably from 350 $\mu$m to 500 $\mu$m.

3.  Insert sheet (10) according to claim 1 or 2,
    **characterized in that**

    the water-borne adhesive layer (6) directly adjoins a surface of the substrate (11) and/or
    the water-borne topcoat layer (4) has a layer thickness in the range from 2 $\mu$m to 100 $\mu$m, preferably from 5 $\mu$m to 80 $\mu$m, further preferably from 15 $\mu$m to 50 $\mu$m, and/or
    the water-borne topcoat layer (4) comprises a water-borne acrylic binder or a water-borne polyurethane binder in the range from 10 wt.-% to 40 wt.-% and deionized water in the range from 50 wt.-% to 80 wt.-% and a leveling agent in the range from 0.1 wt.-% to 5 wt.-% and a defoamer in the range from 0.2 wt.-% to 3 wt.-%.

4.  Insert sheet (10) according to claim 1,
    **characterized in that**

    the insert sheet (10) comprises a water-borne tie-coat layer (7), preferably which is arranged between the water-borne topcoat layer (4) and the at least one water-borne color layer (5); and/or
    the water-borne tie-coat layer (7) has a layer thickness in the range from 0.5 $\mu$m to 20 $\mu$m, preferably from 1 $\mu$m to 15 $\mu$m, further preferably from 1.5 $\mu$m to 7 $\mu$m; and/or
    the water-borne tie-coat layer (7) comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

5.  Insert sheet (10) according to claim 1,
    **characterized in that**

    the at least one water-borne color layer (5) has a layer thickness in the range from 0.5 $\mu$m to 20 $\mu$m, preferably from 1 $\mu$m to 15 $\mu$m, further preferably from 1.5 $\mu$m to 7 $\mu$m; and/or
    the at least one water-borne color layer (5) comprises a water-borne acrylic or a water-borne polyester or a water-borne polyurethane binder in the range from 20 wt.-% to 40 wt.-% and deionized water in the range from 60 wt.-% to 80 wt.-% and at least one color pigment in the range from 5 wt.-% to 20 wt.-% and a dispersing additive in the range from 0.5 wt.-% to 20 wt.-% and a leveling agent in the range from 0.1 wt.-% to 5 wt.-% and a defoamer in the range from 0.1 wt.-% to 5 wt.-%.

**6.** Insert sheet (10) according to claim 1,
**characterized in that**

the at least one water-borne adhesive layer (6) has a layer thickness in the range from 0.5 $\mu$m to 20 $\mu$m, preferably from 1 $\mu$m to 15 $\mu$m, further preferably from 1.5 $\mu$m to 7 $\mu$m; and/or
the at least one water-borne adhesive layer (6) comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

**7.** Insert sheet (10) according to claim 1,
**characterized in that**

the insert sheet (10) has an emanation value of carbon EG equal to or lower than 40 $\mu$g C/g$_{sample}$, preferably determined according to VW interior spec TL226; and/or
the insert sheet (10) has a smell test result in the levels of 2 to 3 according to PV3900 scale determined according to VW interior spec TL226; and/or the insert sheet (10) has a passed cream test and/or sun lotion test and/or hydrolysis test and/or light-fastness test determined according to VW interior spec TL226.

**8.** Insert sheet (10) according to claim 1,
**characterized in that**

the insert sheet (10) has a grey scale rating of equal to or greater than 4 for the cream test and/or sun lotion test and/or hydrolysis test and/or light-fastness test determined according to DIN EN 20105-A02; and/or
the insert sheet (10) has a passed vision and characteristics test for the cream test and/or sun lotion test and/or hydrolysis test and/or light-fastness determined according to VW interior spec TL 226; and/or
the insert sheet (10) has an adhesion test value ISO in the range from GT0 to GT1 for the cream test and/or sun lotion test and/or hydrolysis test and/or light-fastness determined by cross cutting according to DIN EN ISO 2409:2013-06; and/or
the insert sheet (10) has a passed scratch resistance test for the cream test and/or sun lotion test and/or hydrolysis test and/or light-fastness determined according to VW interior spec TL226.

**9.** Transfer film (1), in particular for decorating an insert sheet (10) according to one of claims 1 to 8, comprising a carrier layer (2) and a transfer ply (3), wherein the transfer ply (3) comprises, in particular in the following sequence arranged on the carrier layer, a water-borne topcoat layer (4), at least one water-borne color layer (5) and a water-borne adhesive layer (6).

**10.** Transfer film (1) according to claim 9,
**characterized in that**
the carrier layer (2) comprises PET as material and has a layer thickness in the range from 6 $\mu$m to 100 $\mu$m.

**11.** Transfer film (1) according to claim 9,
**characterized in that**
the transfer film (1) comprises a detachment layer, which is preferably arranged between the carrier layer (2) and the transfer ply (3), in particular water-borne topcoat layer (4).

**12.** Transfer film (1) according to claim 9,
**characterized in that**

the water-borne topcoat layer (4) has a layer thickness in the range from 2 $\mu$m to 100 $\mu$m, preferably from 5 $\mu$m to 80 $\mu$m, further preferably from 15 $\mu$m to 50 $\mu$m; and/or
the water-borne topcoat layer (4) comprises a water-borne acrylic binder or a water-borne polyurethane binder in the range from 10 wt.-% to 40 wt.-% and deionized water in the range from 50 wt.-% to 80 wt.-% and a leveling agent in the range from 0.1 wt.-% to 5 wt.-% and a defoamer in the range from 0.2 wt.-% to 3 wt.-%.

**13.** Transfer film (1) according to claim 9,
**characterized in that**

the transfer film (1) comprises a water-borne tie-coat layer (7), preferably which is arranged between the water-borne topcoat layer (4) and the at least one water-borne color layer (5); preferably wherein

the water-borne tie-coat layer (7) has a layer thickness in the range from 0.5 $\mu$m to 20 $\mu$m, preferably from 1 $\mu$m to 15 $\mu$m, further preferably from 1.5 $\mu$m to 7 $\mu$m; and/or

the water-borne tie-coat layer (7) comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

14. Transfer film (1) according to claim 9,
**characterized in that**

the at least one water-borne color layer (5) has a register tolerance in the range from -0.25 mm to +0.25 mm; and/or

the at least one water-borne color layer (5) has a layer thickness in the range from 0,5 $\mu$m to 20 $\mu$m, preferably from 1 $\mu$m to 15 $\mu$m, further preferably from 1,5 $\mu$m to 7 $\mu$m; and/or

the at least one water-borne color layer (5) comprises a water-borne acrylic or a water-borne polyester or a water-borne polyurethane binder in the range from 20 wt.-% to 40 wt.-% and deionized water in the range from 60 wt.-% to 80 wt.-% and at least one color pigment in the range from 5 wt.-% to 20 wt.-% and a dispersing additive in the range from 0.5 wt.-% to 20 wt.-% and a leveling agent in the range from 0.1 wt.-% to 5 wt.-% and a defoamer in the range from 0.1 wt.-% to 5 wt.-%.

15. Transfer film (1) according to claim 9,
**characterized in that**

the at least one water-borne adhesive layer (6) has a layer thickness in the range from 0.5 $\mu$m to 20 $\mu$m, preferably from 1 $\mu$m to 15 $\mu$m, further preferably from 1.5 $\mu$m to 7 $\mu$m; and/or

the at least one water-borne adhesive layer (6) comprises a water-borne acrylic or a water-borne polyester or a water-borne polyurethane binder in the range from 20 wt.-% to 50 wt.-% and deionized water in the range from 50 wt.-% to 80 wt.-% and a leveling agent in the range from 0.1 wt.-% to 5 wt.-% and a defoamer in the range from 0.1 wt.-% to 5 wt.-%.

16. Method for producing an insert sheet (10), preferably according to claims 1 to 8, comprising a substrate (11) and a transfer ply (3) of a transfer film (1), in particular according to claims 9 to 15, applied to the substrate (11) having the steps of:

- providing a carrier layer (2);
- applying, in particular in the following sequence, a water-borne topcoat layer (4), at least one water-borne color layer (5) and a water-borne adhesive layer (6) by means of printing onto a surface of the carrier layer (2) to provide a transfer film (1);
- providing a substrate (11)
- heat laminating the transfer ply (3) of the transfer film (1) onto a surface of the substrate (11), in particular wherein the water-borne adhesive layer (6) is directly adjoined to the surface of the substrate (11).

17. Method according to claim 16,
**characterized in that**

the water-borne topcoat layer (4) is applied by means of slot-die onto a surface of the carrier layer (2); and/or

during applying the water-borne topcoat layer (4) the water-borne topcoat layer (4) has a dynamic viscosity in range from 0.10 Pa·s to 1.0 Pa s, preferably from 0.2 Pa·s to 0.8 Pa s, further preferably from 0.3 Pa·s to 0.5 Pa·s.

18. Method according to claim 16,
**characterized in that**

a water-borne tie-coat layer (7) is applied by means of gravure printing onto a surface of the carrier layer (2), preferably onto a surface of the water-borne topcoat layer (4), preferably wherein

during applying the water-borne tie-coat layer (7) the water-borne tie-coat layer (7) has a dynamic viscosity in range from 0.10 Pa·s to 1.0 Pa s, preferably from 0.2 Pa·s to 0.8 Pa s, further preferably from 0.3 Pa·s to 0.5 Pa·s.

**19.** Method according to claim 16,
**characterized in that**

the at least one water-borne color layer (5) is applied by means of gravure printing onto a surface of the carrier layer (2), preferably onto a top surface of the water-borne topcoat layer (4) or the water-borne tie-coat layer (7); and/or
during applying the at least one water-borne color layer (5) the at least one water-borne color layer (5) has a dynamic viscosity in range from 0.10 Pa·s to 1.0 Pa s, preferably from 0.2 Pa·s to 0.8 Pa s, further preferably from 0.3 Pa·s to 0.5 Pa s.

**20.** Method according to claim 16,
**characterized in that**

the water-borne adhesive layer (6) is applied by means of gravure printing onto a surface of the carrier layer (2), preferably onto a surface of the at least one water-borne color layer (5); and/or
during applying the water-borne adhesive layer (6) the water-borne adhesive layer (6) has a dynamic viscosity in range from 0.10 Pa·s to 1.0 Pa s, preferably from 0.2 Pa·s to 0.8 Pa s, further preferably from 0.3 Pa·s to 0.5 Pa.s.

**21.** Method according to claim 16,
**characterized in that**

the water-borne topcoat layer (4) and/or the water-borne tie-coat layer (7) and/or the at least one water-borne color layer (5) and/or the water-borne adhesive layer (6) is applied with a printing speed in the range of 5 m/min to 200 m/min, preferably of 10 m/min to 100 m/min, further preferably of 15 m/min to 100 m/min; and/or
the water-borne topcoat layer (4) and/or the water-borne tie-coat layer (7) and/or the at least one water-borne color layer (5) and/or the water-borne adhesive layer (6) is dried with a drying temperature in the range of 80°C to 200°C, preferably of 90°C to 180°C, further preferably of 100°C to 150°C.

**22.** Method according to claim 16,
**characterized in that**

the heat laminating is performed with a lamination speed in a range from 0.2 m/min to 60 m/min, preferably from 0.5 m/min to 40 m/min, further preferably from 1 m/min to 20 m/min; and/or
the heat laminating is performed with a lamination temperature in a range from 90°C to 180°C, preferably from 80°C to 160°C, further preferably from 100°C to 150°C; and/or
the heat laminating is performed with a lamination pressure in a range from 5 bar to 100 bar, preferably from 10 bar to 90 bar, further preferably from 20 bar to 60 bar.

**23.** Method according to claim 16,
**characterized in that**

the method further comprises the following step:

- curing the transfer ply (3), preferably the water-borne topcoat layer (4) and/or the water-borne tie-coat layer (7) and/or the at least one water-borne color layer (5) and/or water-borne the adhesive layer (6), by means of UV-radiation, preferably after forming or deep drawing of the substrate or insert sheet;

and/or the method further comprises the following step:

- detaching the carrier layer (2).

1

2

3 { 4
5
6

Fig. 1

2

3 { 4
5
6
11

Fig. 2

10

3 { 4
5
6
11

Fig. 3

Fig. 4

Fig. 5

Fig. 6

Fig. 7a

Fig. 7b

GT 1
B4

Fig. 8a

GT 2
B3

Fig. 8b

GT 3
B2

Fig. 8c

GT 4
B1

Fig. 8d

Fig. 9

Europäisches Patentamt

European Patent Office

Office européen des brevets

# EUROPEAN SEARCH REPORT

**Application Number**

EP 23 20 4632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2011 251542 A (DAINIPPON PRINTING CO LTD) 15 December 2011 (2011-12-15) * paragraph [0010] – paragraph [0087]; figure 1 * | 1-23 | INV. B44C1/17 |
| X | EP 1 970 215 A2 (DECOR DRUCK LEIPZIG GMBH [DE]) 17 September 2008 (2008-09-17) | 9,10,12, 14,15 | |
| A | * paragraph [0019] – paragraph [0025]; figure 1 * | 1-8, 16-23 | |
| Y | WO 2022/189211 A1 (LEONHARD KURZ STIFTUNG & CO KG [DE]) 15 September 2022 (2022-09-15) * pages 18-20; figures 2,3 * * page 37 – page 60 * | 1-23 | |
| Y | JP 4 887864 B2 (DAINIPPON PRINTING CO LTD) 29 February 2012 (2012-02-29) * the whole document * | 1-23 | |

**TECHNICAL FIELDS SEARCHED (IPC)**

B44C
B29C

The present search report has been drawn up for all claims

| Place of search | Date of completion of the search | Examiner |
|---|---|---|
| Munich | 19 March 2024 | Björklund, Sofie |

EPO FORM 1503 03.82 (P04C01)

## ANNEX TO THE EUROPEAN SEARCH REPORT
## ON EUROPEAN PATENT APPLICATION NO.

EP 23 20 4632

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2024

| Patent document cited in search report | | Publication date | Patent family member(s) | | Publication date |
|---|---|---|---|---|---|
| JP 2011251542 | A | 15-12-2011 | NONE | | |
| EP 1970215 | A2 | 17-09-2008 | DE 102007010460 | A1 | 04-09-2008 |
| | | | EP 1970215 | A2 | 17-09-2008 |
| WO 2022189211 | A1 | 15-09-2022 | CN 117042980 | A | 10-11-2023 |
| | | | DE 102021106085 | A1 | 15-09-2022 |
| | | | EP 4304873 | A1 | 17-01-2024 |
| | | | KR 20230153491 | A | 06-11-2023 |
| | | | TW 202237424 | A | 01-10-2022 |
| | | | WO 2022189211 | A1 | 15-09-2022 |
| JP 4887864 | B2 | 29-02-2012 | JP 4887864 | B2 | 29-02-2012 |
| | | | JP 2007268830 | A | 18-10-2007 |

EPO FORM P0459

For more details about this annex : see Official Journal of the European Patent Office, No. 12/82